# EUROPÄISCHE PATENTANMELDUNG

(11) **EP 3 543 940 A1**
(43) Veröffentlichungstag der Anmeldung: **25.09.2019**
(21) Anmeldenummer: 18163632.5
(22) Anmeldetag: 23.03.2018
(51) Int. Cl.: G06Q 30/00, H04L 9/32

(54) **COMPUTERIMPLEMENTIERTES VERFAHREN ZUM BEREITSTELLEN VON DATEN, INSBESONDERE FÜR EINE KONFORMITÄTSVERFOLGUNG**

(71) Anmelder: Siemens Aktiengesellschaft, 80333 München (DE)
(72) Erfinder: Rathgeb, Andreas, 91099 Poxdorf (DE); Udas, Manish, 91054 Erlangen (DE)

(57) **Zusammenfassung**

Die Erfindung betrifft ein computerimplementiertes Verfahren zum Bereitstellen von Daten, insbesondere für eine Konformitätsverfolgung, in einem verteilten peer-to-peer Netz (1), mit den Schritten:
- Bereitstellen zumindest eines ersten Datenblocks (4a), insbesondere mit Daten repräsentativ für die Konformitätsverfolgung, zum Generieren einer Blockchain (3) mit einer ersten Prüfsumme (6a) durch eine erste Instanz (5a) des peer-to-peer Netzes (1),
- Bereitstellen zumindest eines proof-of-authority Nachweises (10) zum Verifizieren eines weiteren Datenblocks (4b, 4c),
- Erzeugen des weiteren Datenblocks (4b, 4c) repräsentativ für eine Konformitätsverfolgung mit einer weiteren Prüfsumme (6b, 6c) und zumindest der ersten Prüfsumme (6a) durch eine weitere Instanz (5b, 5c) des peer-to-peer Netzes (1),
- Prüfen des proof-of-authority Nachweises (10),
- Hinzufügen des weiteren Datenblocks (4b, 4c) zum ersten Datenblock (3a) bei erfolgreicher Prüfung des proof-of-authority Nachweises (10) um die Blockchain (3) zu bilden, und
- Bereitstellen der Blockchain (3) in dem verteilten Peer-to-peer Netz (1),
wobei einer der Datenblöcke (4a, 4b, 4c) als ein Smart Contract (29a, 29b, 29c) ausgebildet ist, der auf Vorliegen eines vorbestimmten Fehlerfalls eine Fehlerbehandlungsmaßnahme bereitstellt und/oder auf Vorliegen eines Testauslösesignals (37) eine Funktionsprüfung auslöst.

## Beschreibung

Die Erfindung betrifft ein computerimplementiertes Verfahren zum Bereitstellen von Daten, insbesondere für eine Konformitätsverfolgung.

Produkte und Systeme können ein Gefährdungspotential beinhalten und unterliegen dann Richtlinien, Bestimmungen und Gesetzen, deren Einhaltung behördlich oder durch sogenannte notifizierte Stellen überwacht wird. Diese Überwachung kann das Design, die Herstellung, die Dokumentation, Montage, Inbetriebnahme, den Betrieb und die Entsorgung bzw. Demontage, also den gesamten Lebenszyklus des Systems oder Produktes betreffen.

Der Gesetzgeber schreibt hierfür einen Prüf- und Zertifizierungsprozess vor, der durch Konformitätsbewertungsstellen mit entsprechender Kompetenz durchgeführt wird.

Je nach Branche, Anlage, System oder Produkt werden im Zuge des Entwurfs oder der Planung überwachungsrelevante Bereiche oder Teile identifiziert und die gültigen Anforderungen aus Normen, Richtlinien, Bestimmungen und Gesetzen benannt.

Basic- und Detail-Design werden entsprechend ausgeführt, dokumentiert, geprüft und zur Ausführung freigegeben.

Während und nach Abschluss der Bauphase wird das realisierte technische System / der Produktprototyp gegen die freigegebene Planung geprüft und entsprechend dem Prüfergebnis zur Inbetriebnahme bzw. zum Inverkehrbringen freigegeben (Erklärung der Konformität, Betriebserlaubnis).

Zur Aufrechterhaltung des konformen Betriebs werden, soweit erforderlich, wiederkehrende oder stichprobenhafte Prüfungen (z.B. zur Anlagen- oder Produkt-Sicherheit) durchgeführt und dokumentiert. Ebenso werden fachgerechte Demontage und Entsorgungsnachweise zum Ende der Lebensdauer notwendig und entsprechend dokumentiert.

Bei Prozessanlagen liegt so z.B. für jede Phase des Systemlebenslaufs eine Dokumentation der jeweiligen Phase vor.

Diese Vorgehensweise liegt in der Verantwortung des Herstellers bzw. Betreibers und seiner Beauftragten.

Ein Verlust dieser Dokumentation bzw. von Teilen der Dokumentation kann zum Entzug der Betriebserlaubnis, zu Rückrufaktionen, zum Neubau, zum Stillstand der Anlage und damit zu hohen Verlusten führen. Die Nichteinhaltung von Richtlinien und Gesetzen kann ggfs. auch Haftstrafen zur Folge haben.

Die Dokumentation zur Einhaltung aller Gesetze und Richtlinien mit den zugehörigen Prüfzertifikaten ist zum gegenwärtigen Zeitpunkt eine umfangreiche und komplexe Aufgabe, die mit mindestens 3 Parteien (Hersteller, Prüfer, Betreiber) und zahlreichen qualifizierten Personen umgesetzt wird. Die Dokumentation muss für viele Jahrzehnte archiviert, aber auch revisioniert werden, um zu jedem Zeitpunkt, z.B. im Falle eines Audits oder eines Betriebsunfalls, verfügbar zu sein. Alle Ursachenanalysen, Korrekturmaßnahmen und insbesondere Haftungsfragen müssen die hier enthaltenen aktuellen Informationen einbeziehen.

Bis zum gegenwärtigen Zeitpunkt erfolgt der Nachweis und die Dokumentation durch manuelle und papiergetriebene Prozesse. Die entstehende Papierdokumentation mit Prüfstempeln und Paraphen ist umfangreich, aufwendig, langsam und unflexibel.

Die Verwendung von physischen Stempeln zur Freigabe von Dokumenten ist mangelhaft, fälschungsunsicher und nicht automatisierbar.

Die Abnahme von z.B. fehlersicheren Steuerungen, die bereits digitale Prüfsummen in verifizierten digitalen Systemen bereitstellen, erfolgt auf Basis von einer Papierdokumentation.

Die Verwendung von traditionellen Dokumentenformaten verhindert eine Automatisierung und zwingt zur Bearbeitung von größeren Einheiten. Eine flexible granulare und modulare Bearbeitung von Teilsystemen bzw. der Austausch von einzelnen Produkten eines größeren Systems erfordert stets die Revision größerer Systeme mit entsprechendem Aufwand.

Die Herstellung von mehreren Originalen ist aufwändig bei Verteilung und Archivierung, die über viele Jahrzehnte hohen Verwaltungsaufwand erzeugen.

Es ist daher Aufgabe der Erfindung, hier Abhilfe zu schaffen.

Die Aufgabe wird gelöst durch ein computerimplementiertes Verfahren zum Bereitstellen von Daten, insbesondere für die Konformitätsverfolgung, in einem verteilten peer-to-peer Netz, mit den Schritten:
- Bereitstellen zumindest eines ersten Datenblocks, insbesondere mit Daten repräsentativ für eine Konformitätsverfolgung, zum Generieren einer Blockchain mit einer ersten Prüfsumme durch eine erste Instanz des peer-to-peer Netzes,
- Bereitstellen zumindest eines proof-of-authority Nachweises zum Verifizieren eines weiteren Datenblocks,
- Erzeugen des weiteren Datenblocks repräsentativ für eine Konformitätsverfolgung mit einer weiteren Prüfsumme und zumindest der ersten Prüfsumme durch eine weitere Instanz des peer-to-peer Netzes,

- Prüfen des proof-of-authority Nachweises,
- Hinzufügen des weiteren Datenblocks zum ersten Datenblock bei erfolgreicher Prüfung des proof-of-authority Nachweises, um die Blockchain zu bilden, und
- Bereitstellen der Blockchain in dem verteilten peer-to-peer Netz,
wobei einer der Datenblock als ein Smart Contract ausgebildet ist, der auf Vorliegen eines vorbestimmten Fehlerfalls eine Fehlerbehandlungsmaßnahme bereitstellt und/oder auf Vorliegen eines Testauslösesignals eine Funktionsprüfung auslöst.

Die Instanzen können verschiedenen Beteiligten zugeordnet sein, wie z.B. einem Lieferant, einem Anlagenbauer, einem Qualitätsmanager und einer notifizierende Stelle. Die erste Instanz ist diejenige Instanz, die durch Bilden eines ersten Datenblocks eine Blockchain startet. Durch die Verwendung von proof-of-authority Nachweisen wird im Gegensatz zu einer Legitimation durch proof-of-work die erforderliche Rechenleistung reduziert und es ist zugleich möglich, im Vergleich schneller die Blockchain durch Hinzufügen neuer Datenblöcke zu aktualisieren. Dabei verleiht ein proof-of-authority Nachweis einer Instanz die Kompetenz, Transaktionen zu validieren (z.B. durch sogenannte Validatoren) und in Blöcke zu fassen. Die proof-of-authority Nachweise können von der ersten Instanz bereitgestellt werden. Alternativ oder zusätzlich kann aber auch vorgesehen sein, dass die weiteren Instanzen proof-of-authority Nachweise bereitstellen können.

Das Prüfen des proof-of-authority Nachweises umfasst dabei das Übermitteln des an die Blockchain hinzufügenden Datenblocks zusammen mit dem proof-of-azthority Nachweis an die anderen Instanzen, die den proof-of-authoity Nachweis überprüfen und bei erfolgreicher Prüfung eine Freigabe erteilen, den Datenblock an die Blockchain hinzuzufügen. Für die Freigabe kann ein Kriterium vorgegeben sein, z.B. dass die Hälfte der Instanzen eine Freigabe erteilt.

Durch das erfindungsgemäße Verfahren werden folgende Vorteile erreicht:
1. Unfälschbarkeit: Die Aufgrund der Architektur der Blockchain implizite Unfälschbarkeit ermöglicht die Digitalisierung von Zertifizierungsstempeln.
2. Qualität: Menschliche Fehler werden aufgrund der Übertragung der Arbeitsabläufe in digitale Prozesse und deren Automatisierung minimiert.
3. Integrität in der Zusammenarbeit: Hohes Vertrauen zwischen den agierenden Beteiligten wird durch das hohe Niveau der Autorisierung des Zugriffs und in Bezug auf die Unfälschbarkeit der gespeicherten Daten hergestellt.
4. Verfügbarkeit und Zugriffsgeschwindigkeit auf Daten: Die Digitalisierung in einer verteilten, automatisch replizierten Datenbank erreicht für diese Daten eine bisher unerreichte Geschwindigkeit.
5. Transparenz und Auditierbarkeit: Die Strukturierung und Modularisierung der Daten in digitalen Prozessen ermöglicht besseres Verständnis bezüglich Inhalt und Ablauf. Die Auditierbarkeit wird vereinfacht und das Anlagenrisiko kalkulierbar und reduziert. Die Versicherungsprämien des Betreibers fallen.
6. Beschleunigung: Planung, Bau und Inbetriebnahme können erheblich beschleunigt werden, Dokumentenversand und örtliche Abnahmen entfallen. Die Veranlassung von Maßnahmen zum Erhalt der Produktion ist unmittelbar möglich.
7. Aufwands- und Kostenreduktion: Automatisierung innerhalb der Blockchain bietet zusätzliche Effizienzsteigerung in den Workflows für alle Parteien.

Ferner kann aufgrund der Beibehaltung des Grundzertifizierungsablaufs (Prüfung der Daten durch Prüfer bzw. notifizierte Stelle) und einer hochwertigen Authentifizierung die Auswirkung eines Angriffs auf die Mensch-Maschinen-Schnittstelle gut erkannt und damit begrenzt werden.

Durch die vollständige Digitalisierung lassen sich zwischen den Beteiligten nun auch nicht dokumentenartige Daten austauschen. Dies bedeutet, das Datenformate proprietärer Software ausgetauscht und z.B. Prüfzwecken zugeführt werden können. Beispielsweise kann das erstellte Programm einer fehlersicheren Steuerung als proprietäre Simatic-Datei einschließlich der zugehörigen Prüfsumme an den TÜV übermittelt werden, der diese Datei dann z.B. in einer Prüfsimulation auf Fehler prüfen kann ohne seine Prüfmechanismen und Werkzeuge zu veröffentlichen. Dies erhöht die Qualität der Prüfung und damit auch der Anlagensicherheit.

Durch die Vereinbarung und Verwendung von herstellerneutralen Datenformaten kann diese Funktion erheblich vereinfacht werden.

Zusätzlich kann auch eine traditionelle Dokumentation in Form von PDF-Dokumenten o.ä. in der Blockchain abgelegt werden, so dass eine traditionelle Papierdokumentation z.B. bei relevanten Meilensteinen (design freeze, Bauabnahme, vorläufige Übernahme, usw.) aus der Blockchain erzeugt werden kann.

Dabei werden unter Smart Contracts Verträge auf Software-Basis verstanden, bei denen unterschiedlichste Vertragsbedingungen hinterlegt werden können. Während des Vertragsverlaufs können bestimmte verknüpfte Aktionen (z.B. Auszahlungen) selbsttätig ausgeführt werden, wenn ein entsprechender Auslöser (z.B. Erfüllung von Vertragsbedingungen) vorliegt. So kann z.B. die Blockchain dazu genutzt werden, Fehlerbehandlungsmaßnahmen bereitzustellen. Wenn bei einer Komponente einer Anlage, wie z.B. einem Feldgerät, ein Fehler auftritt, triggert das dazu korrespondierende Fehlersignal den als Smart Contract ausgebildeten Datenblock, so dass dann eine entsprechende Maßnahme zur Fehlerbehandlung, wie Deaktivierung des defekten Feldgeräts und Benachrichtigung zum Austausch, umgesetzt werden.

Für eine transparente und weltweit akzeptierte Anwendung der beschriebenen Technologie können Smart Contracts soweit möglich als quelloffener Source-Code veröffentlicht werden. Die Veröffentlichung (git-hub) dient der Einsicht, Prüfung und Verbesserung der Technologie und damit auch der Sicherheit von Produkten und Systemen. Durch die Bereitstellung des Source-Codes einschließlich der zugehörigen Prüfsumme des kompilierten Smart Contracts kann zu jeder Zeit die Verwendung der Smart Contracts in einer Blockchain durch die Anwender verifiziert werden, so dass Streitfälle reduziert werden können.

So werden folgende Vorteile erreicht:
1. Neue automatisierte Schutzwirkung: Durch die Verknüpfung des in der Blockchain online aktuellen Konformitätsstatus können neue autonome Schutzwirkungen im Betrieb der Anlage (z.B. Anregung des Anlagenstillstands) ausgelöst werden, die auch Management-Aspekte der Sicherheit einbeziehen.
2. Selbst-Dokumentation: Durch die Integration von produktspezifischen Smart Contracts können sicherheitsgerichtete Eigenschaften in Planung und Ausführung dokumentiert und geprüft werden (z.B. im Konfigurationsmanagement gemäß safety integrity level SIL)
3. Neue Dienstleistungen im Bereich Anlagensicherheit und Konformität: Die Technologie ermöglicht neue digitale Dienstleistungen im Bereich der Produkt- und Systemsicherheit, die mit dieser Plattform realisiert werden können.

Gemäß einer Ausführungsform fordert das Testauslösesignal ein Testsignal an. Mit anderen Worten, der Smart Contract bewirkt, dass innerhalb einer vorbestimmten Zeitdauer ein Testsignal erzeugt wird. So wird die Testauslösung automatisiert.

Gemäß einer weiteren Ausführungsform wird ein Testsignal von dem Smart Contract bereitgestellt. Es wird also von dem Smart Contract selbst das Testsignal erzeugt. Es bedarf also keines weiteren Eingriffs, um z.B. manuell ein Testsignal auszulösen. Vielmehr wird das Testsignal automatisch erzeugt.

Gemäß einer weiteren Ausführungsform stellt der Smart Contract ein Rücksetzsignal bereit. Somit wird erreicht, dass auf einen erfolgreichen Test hin das System wieder in einen Zustand versetzt wird, der dem Zustand vor dem Test entspricht.

Gemäß einer weiteren Ausführungsform stellt der Smart Contract ein Rückmeldesignal bereit. Somit wird durch das Rückmeldesignal die Blockchain aktualisiert und der erfolgreich bestandene Test archiviert und publiziert.

Gemäß einer weiteren Ausführungsform ist das peer-to-peer Netz ein privates Netz. Somit handelt es sich bei der Blockchain um eine Federated Blockchain or Consortium Blockchain, also um eine nicht-öffentliche Blockchain.

Gemäß einer weiteren Ausführungsform hat der proof-of-authority Nachweis zumindest eine zeitlich begrenzte Gültigkeitsdauer. Dabei wird unter einer zeitlich begrenzten Gültigkeit verstanden, dass die proof-of-authority Nachweise ein Verfallsdatum aufweisen und nach Überschreiten des Verfallsdatums eine der weiteren Instanzen nicht mehr in die Lage versetzen, weitere Datenblöcke zu der Blockchain hinzuzufügen. So kann z.B. der Umstand abgebildet werden, dass ein Nachweis einer Prüfung innerhalb einer vorbestimmten Zeitspanne erbracht werden muss. Ferner wird so einem Missbrauch entgegengewirkt, da die proof-of-authority Nachweise keine unbegrenzte Lebensdauer haben.

Gemäß einer weiteren Ausführungsform hat der proof-of-authority Nachweis zumindest eine inhaltliche Gültigkeit. Unter einer inhaltlichen Gültigkeit wird verstanden, dass die proof-of-authority Nachweise nur dazu berechtigen, dass vorbestimmte Eingaben gemacht werden können, wie z.B. die Bestätigung, dass eine Prüfung durchgeführt wurde. Mit anderen Worten, die proof-of-authority Nachweise sind sachgebunden. Auch so kann einem Missbrauch entgegengewirkt werden.

Gemäß einer weiteren Ausführungsform hat der proof-of-authority Nachweis zumindest eine nutzerbezogene Gültigkeit. Unter einer nutzerbezogenen Gültigkeit wird verstanden, dass die proof-of-authority Nachweise nur eine jeweilige, vorbestimmte Instanz dazu berechtigen, dass vorbestimmte Eingaben gemacht werden können, wie z.B. die Bestätigung, dass eine Prüfung durchgeführt wurde. Mit anderen Worten, die proof-of-authority Nachweise sind individualisiert bzw. nutzerbezogen.

Gemäß einer weiteren Ausführungsform ist einer der Datenblöcke als Smart Contract ausgebildet, der auf Vorliegen einer vorbestimmten Bedingung einen proof-of-authority Nachweis bereitstellt. So kann z.B. einer der Datenblöcke dazu ausgebildet sein auf Vorliegen einer vorbestimmten Bedingung einen proof-ofauthority Nachweis bereitzustellen. Somit erzeugt nicht nur die erste Instanz die proof-of-authority Nachweise, sondern die jeweiligen proof-of-authority Nachweise werden erst erzeugt und bereitgestellt, wenn die vorbestimmten Bedingungen eines Vorgängerschritts, wie z.B. ein Nachweis von Zwischentests oder Vorprüfungen, nachgewiesen wurden durch Eintrag in die Blockchain. Somit entfällt, proof-of-authority Nachweise zu Beginn "auf Vorrat" zu erzeugen und sicher vor unbefugten Zugriff zu archivieren, was die Sicherheit erhöht.

Gemäß einer weiteren Ausführungsform ist eine Heilungsfunktion zum Ändern von zumindest einem Datenblock vorgesehen. Hierzu kann ein Smart Contract vorgesehen sein, der auf eine explizite Zustimmung aller Beteiligten hin Fehler oder falsche Daten benennt oder kenntlich macht.

Ferner gehören zur Erfindung ein derartiges System und Computerprogrammprodukte. Ein erstes Computerprogrammprodukt kann für eine erste Instanz vorgesehen sein, während ein zweites Computerprogrammprodukt für die weiteren Instanzen vorgesehen ist. Bei einem dritten Computerprogrammprodukt kann es sich um einen Smart Contract handeln, der auf Vorliegen eines vorbestimmten Fehlerfalls eine Fehlerbehandlungsmaßnahme bereitstellt und/oder auf Vorliegen eines Testauslösesignal eine Funktionsprüfung auslöst.

Im Folgenden wird eine bevorzugte Ausführungsform des erfindungsgemäßen Verfahrens anhand der beigefügten schematischen Zeichnungen erläutert. Es zeigt:
Fig. 1 eine schematische Darstellung eines peer-to-peer Netzwerkes,
Fig. 2 eine schematische Darstellung einer in dem in Fig. 1 gezeigten peer-to-peer Netzwerk verwendeten Blockchain,
Fig. 3 eine schematische Darstellung einer Speichererweiterung zur Performancesteigerung,
Fig. 4 eine schematische Darstellung eines Verfahrensablaufs,
Fig. 5 eine schematische Darstellung eines weiteren Verfahrensablaufs betreffend eine Anwendung bei Systemen in Prozess- oder Fertigungsanlagen im Rahmen der Planung der Anlage,
Fig. 6 eine schematische Darstellung eines Verfahrensablaufs für eine Funktionsprüfung,
Fig. 7 eine schematische Darstellung eines weiteren Verfahrensablaufs für eine Funktionsprüfung,
Fig. 8 eine schematische Darstellung eines weiteren Verfahrensablaufs für eine Funktionsprüfung, und

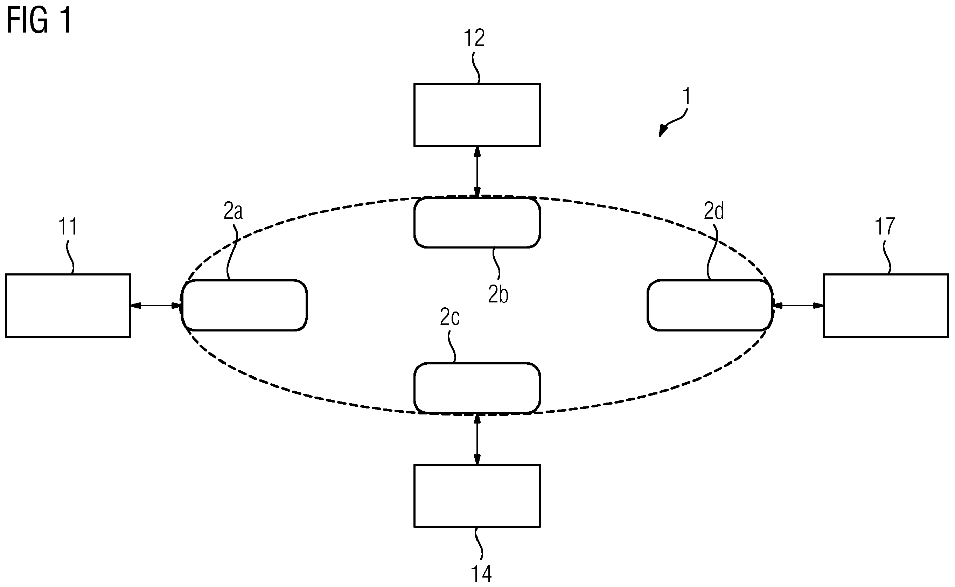

Es wird zunächst auf Fig. 1 Bezug genommen.

Dargestellt ist ein verteiltes peer-to-peer Netz 1, dass zur Umsetzung eines computerimplementiertes Verfahrens zum Bereitstellen von Daten, im vorliegenden Ausführungsbeispiel für eine Konformitätsverfolgung eines Systems oder einer Anlage ausgebildet ist.

Das peer-to-peer Netz 1 umfasst im vorliegenden Ausführungsbeispiel vier Nodes 2a, 2b, 2c, 2d.

Dabei wird unter einem peer-to-peer Netz 1 ein Computernetzwerk verstanden bei dem alle Nodes 2a, 2b, 2c, 2d gleichberechtigt sind im Gegensatz zu einem Computernetzwerk mit einer Client-Server-Architektur.

An jedem der Nodes 2a, 2b, 2c, 2d kann ein Computer oder ein Cloud-Computer angebunden sein. Die so entstehende Rechenleistung des Gesamtsystems bildet die Hardware-Basis.

Für eine Konformitätsverfolgung eines Systems oder einer Anlage benötigt nur eine begrenzte und speziell autorisierte Gruppe von Anwendern Zugriff auf die Daten. Daher wird im vorliegenden Ausführungsbeispiel - wie noch später detailliert erläutert wird - eine private Blockchain gebildet.

In dem in Fig. 1 dargestellten Szenario ist der erste Node 2a einem Lieferanten, der zweite Node 2b einem Fabrik- oder Anlagenbauer, der dritte Node 2c einem Prüfer bzw. notifizierenden Stelle und der vierte Node 2d einem Betreiber zugeordnet.

Jeder Node 2a, 2b, 2c, 2d enthält neben Hardware-Komponenten auch Software-Komponenten in Form von Computerprogrammprodukten, bei denen es sich um Blockchain-Software (stack) handelt, deren Aufgaben und Funktionen später detailliert erläutert werden.

Des Weiteren kann z.B. für eine Konformitätsverfolgung ein user interface mit vorgesehen sein oder eine bestehende Planungs-, Engineering oder Abwicklungssoftware eingebunden sein. In letzterem Fall wird das user interface bestehender Software (z.B. COMOS - eine einheitliche Datenbankplattform für Anlagenbauer) so adaptiert, dass die erforderlichen Informationen der Konformität mit entsprechenden Meta-Daten in einen distributed ledger publiziert oder diese bei Bedarf rückgelesen werden können um weitere Arbeitsschritte zu ermöglichen.

Dabei wird unter distributed ledger eine spezielle Form der elektronischen Datenverarbeitung und -speicherung verstanden. Als distributed ledger oder "Verteiltes Kontenbuch" wird eine dezentrale Datenbank bezeichnet, die Teilnehmern des Netzwerks eine gemeinsame Schreib- und Leseberechtigung erlaubt. Im Gegensatz zu einer zentral verwalteten Datenbank bedarf es in diesem Netzwerk keiner zentralen Instanz, die neue Einträge in der Datenbank vornimmt. Neue Datensätze können jederzeit von den Teilnehmern selbst hinzugefügt werden. Ein anschließender Aktualisierungsprozess sorgt dafür, dass alle Teilnehmer jeweils über den neuesten Stand der Datenbank verfügen. Eine besondere Ausprägung der distributed ledger ist eine Blockchain 3.

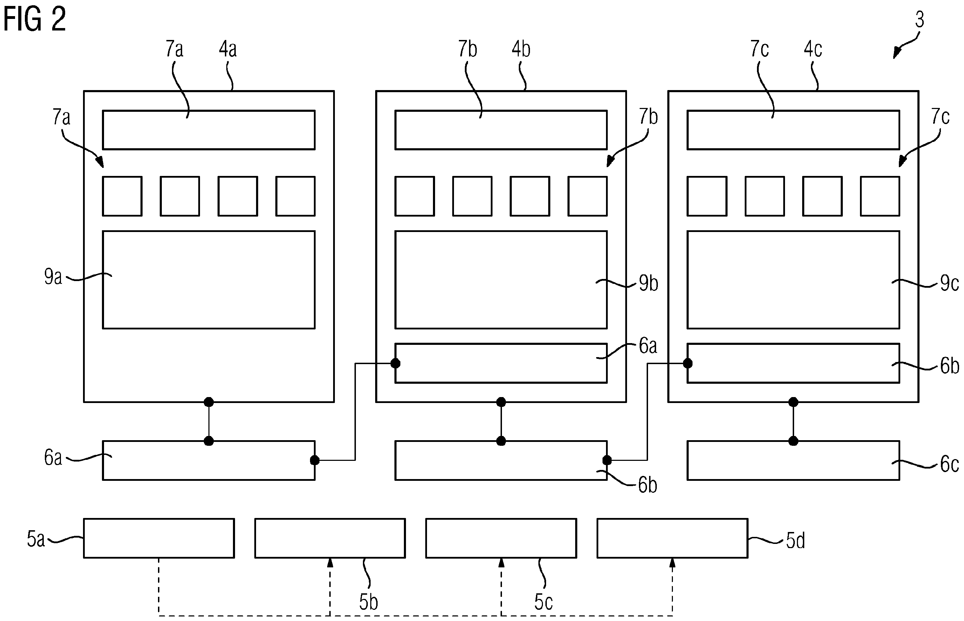

Es wird nun zusätzlich auf Fig. 2 Bezug genommen.

Dargestellt ist die Blockchain 3. Dabei wird unter einer Blockchain 3 eine kontinuierlich erweiterbare Liste von Datensätzen verstanden, welche mittels kryptographischer Verfahren miteinander verkettet sind. Jeder Block enthält dabei typischerweise eine kryptographisch sichere Prüfsumme des vorhergehenden Blocks, sowie gegebenenfalls einen Zeitstempel und weitere Transaktionsdaten.

Im vorliegenden Ausführungsbeispiel weist die Blockchain 3 einen ersten Datenblock 4a mit einem ersten Datensatz und einen zweiten Datenblock 4b mit einem zweiten Datensatz sowie einen dritten Datenblock 4c mit einem dritten Datensatz auf. Dabei wird im Verlauf einer Konformitätsverfolgung in einem ersten Schritt zuerst der erste Datenblock 4a erzeugt, mit dem die Blockchain 3 begonnen wird. In weiteren Schritten werden der zweite Datenblock 4b mit dem zweiten Datensatz sowie der dritte Datenblock 4c mit dem dritten Datensatz hinzugefügt und so die Blockchain 3 erweitert.

Jedem der Datenblöcke 4a, 4b, 4c ist eine jeweilige Prüfsumme 6a, 6b, 6c zugeordnet, wie z.B. ein Hash-Wert. Zum Bestimmen der Prüfsumme 6a, 6b, 6c kann z.B. eine Hashfunktion, wie der SHA-256 Algorithmus (Secure Hash Algorithm) verwendet werden.

Die Datensätze der jeweiligen Datenblöcke 4a, 4b, 4c weisen jeweils eine Blocknummer 7a, 7b, 7c repräsentativ für die jeweilige Position in der Blockchain 3, eine oder mehrere digitale Signaturen 8a, 8b, 8c repräsentativ für den jeweiligen Nutzer, Daten 9a, 9b, 9c betreffend die Konformitätsverfolgung, wie z.B. Prüfzertifikate etc., und die jeweilige Prüfsumme 6a, 6b, 6c des vorherigen Datenblocks 4a, 4b auf.

So weist der erste Datenblock 4a, da er der erste Datenblock 4a ist, keine Prüfsumme eines Vorgängerblocks auf, während der zweite Datenblock 4b die erste Prüfsumme 6a des ersten Datenblocks 4a aufweist und der dritte Datenblock 4b die zweite Prüfsumme 6b des zweiten Datenblocks 4b aufweist.

Der erste Datenblock 4a ist einer ersten Instanz 5a, im vorliegenden Ausführungsbeispiel dem Lieferanten 11 zugeordnet, während der zweite Datenblock 4b einer zweiten Instanz 5b, z.B. dem Fabrik/Anlagenbauer 12 und der dritte Datenblock 4c einer dritten Instanz 5c, z.B. der notifizierenden Stelle 14 zugeordnet ist. Abweichend hiervon sind auch andere Zuordnungen möglich.

Die erste Instanz 5a, also diejenige Instanz, die die Blockchain 3 mit dem ersten Datenblock 4a startet, ist im vorliegenden Ausführungsbeispiel dazu vorgesehen, proof-of-authority Nachweise 10 zu emittieren. Mit anderen Worten, die erste Instanz 5a kann als Ursprungs- oder Basisinstanz angesehen werden.

Die proof-of-authority Nachweise 10 werden an die anderen Instanzen 5b, 5c übermittelt. Die proof-of-authority Nachweise 10 versetzten die anderen Instanzen 5b, 5c in die Lage, weitere Datenblöcke 4b, 4c zu der Blockchain 3 hinzuzufügen.

Die proof-of-authority Nachweise 10 können eine zeitlich begrenzte Gültigkeit und/oder eine inhaltliche Gültigkeit und/oder eine nutzerbezogene Gültigkeit haben.

Dabei wird unter einer zeitlich begrenzten Gültigkeit verstanden, dass die proof-of-authority Nachweise 10 ein Verfallsdatum aufweisen und nach Überschreiten des Verfallsdatums eine der weiteren Instanzen 5b, 5c nicht mehr in die Lage versetzen, weitere Datenblöcke 4b, 4c zu der Blockchain 3 hinzuzufügen. So kann z.B. der Umstand abgebildet werden, dass ein Nachweis einer Prüfung innerhalb einer vorbestimmten Zeitspanne erbracht werden muss. Ferner wird so einem Missbrauch entgegengewirkt, da ein proof-of-authority Nachweis 10 keine unbegrenzte Lebensdauer hat.

Unter einer inhaltlichen Gültigkeit wird verstanden, dass die proof-of-authority Nachweise 10 nur dazu berechtigen, dass vorbestimmte Eingaben gemacht werden können, wie z.B. die Bestätigung, dass eine Prüfung durchgeführt wurde. Mit anderen Worten, die proof-of-authority Nachweise 10 sind sachgebunden. Auch so kann einem Missbrauch entgegengewirkt werden.

Unter einer nutzerbezogenen Gültigkeit wird verstanden, dass die proof-of-authority Nachweise 10 nur eine jeweilige, vorbestimmte Instanz 5a, 5b, 5c dazu berechtigen, dass vorbestimmte Eingaben gemacht werden können, wie z.B. die Bestätigung, dass eine Prüfung durchgeführt wurde. Mit anderen Worten, die proof-of-authority Nachweise 10 sind individualisiert bzw. nutzerbezogen.

Es kann auch vorgesehen sein, dass einer der Datenblöcke 4a, 4b, 4c als ein Smart Contract ausgebildet ist. Dabei werden unter Smart Contracts Verträge auf Software-Basis verstanden, bei denen unterschiedlichste Vertragsbedingungen hinterlegt werden können. Während des Vertragsverlaufs können bestimmte verknüpfte Aktionen (z.B. Auszahlungen) selbsttätig ausgeführt werden, wenn ein entsprechender Auslöser (z.B. Erfüllung von Vertragsbedingungen) vorliegt.

So kann einer der Datenblöcke 4a, 4b, 4c dazu ausgebildet sein auf Vorliegen einer vorbestimmten Bedingung einen proof-of-authority Nachweis 10 bereitzustellen. Somit erzeugt nicht nur die erste Instanz 5a die proof-of-authority Nachweise 10, sondern die jeweiligen proof-of-authority Nachweise 10 werden erst erzeugt und bereitgestellt, wenn die vorbestimmten Bedingungen eines Vorgängerschritts, wie z.B. ein Nachweis von Zwischentests oder Vorprüfungen, nachgewiesen wurden. Somit entfällt, proof-of-authority Nachweise 10 zu Beginn "auf Vorrat" zu erzeugen und sicher vor unbefugten Zugriff zu archivieren, was die Sicherheit erhöht.

Des Weiteren kann einer der Datenblöcke 4a, 4b, 4c dazu ausgebildet sein, auf Vorliegen eines vorbestimmten Fehlerfalls eine Fehlerbehandlungsmaßnahme bereitzustellen. So kann z.B. die Blockchain 3 dazu genutzt werden, Fehlerbehandlungsmaßnahmen bereitzustellen. Wenn bei einer Komponente einer Anlage, wie z.B. einem Feldgerät, ein Fehler auftritt, triggert das dazu korrespondierende Fehlersignal den als Smart Contract ausgebildeten Datenblock 4a, 4b, 4c, so dass dann eine entsprechende Maßnahme zur Fehlerbehandlung, wie Deaktivierung des defekten Feldgeräts und Benachrichtigung zum Austausch, umgesetzt werden.

Außerdem ist eine Heilungsfunktion vorgesehen zum Ändern von einem oder mehreren der Datenblöcke 4a, 4b, 4c.

Da eine begrenzte Menge an bekannten Beteiligten agiert, kann zur "Heilung" von Fehlern bei der Umsetzung der Technologie ein eigener Smart Contract mit einer Heilungsfunktion realisiert werden, der bei expliziter Zustimmung aller Beteiligten Fehler oder falsche Daten benennt oder kenntlich macht. Dies kann vorteilhaft in einer ersten Phase der Umsetzung Verwendung finden. Für den Fall einer Datenreduktion oder technisch bedingten Migration kann die Übertragung der Datenhaltung in eine neu initiierte Blockchain 3 vorgesehen sein.

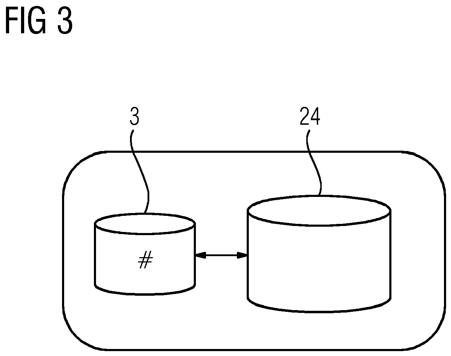

Es wird nun zusätzlich auf Fig. 3 Bezug genommen.

Dargestellt ist eine Massendatenverarbeitung zur Performancesteigerung. Hierzu kann ein Replikationssystem 24, wie z.B. IPFS, verwendet werden, wobei in der Blockchain 3 z.B. ein Zeiger verschlüsselt archiviert ist, der auf korrespondierende Speicherbereiche des Replikationssystems 24 verweist. Dies kann als Betriebssystem oder verteilte und hochverfügbare Ablaufumgebung angesehen werden.

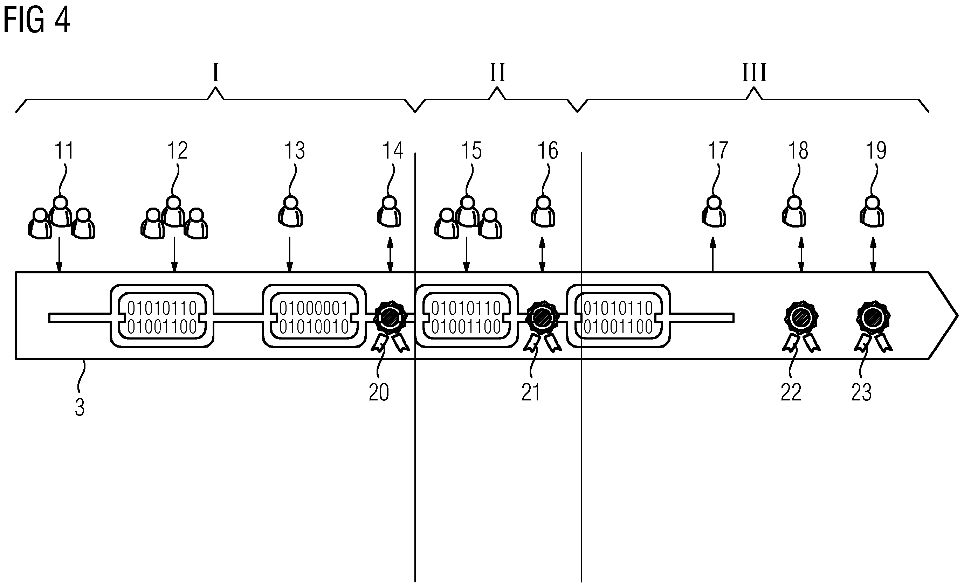

Es wird nun unter zusätzliche Bezugnahme auf Fig. 4 ein Ausführungsbeispiel eines Verfahrensablaufs erläutert.

Der Verfahrensablauf gliedert sich in drei Phasen, einer ersten Phase I konforme Auslegung und Planung, einer zweiten Phase II konformer Bau, und einer dritten Phase III konformer Betrieb, Wartung und Pflege.

In der ersten Phase I sind im vorliegenden Ausführungsbeispiel der Lieferant 11, der Anlagenbauer 12, ein Qualitätsmanager 13 und die notifizierende Stelle 14 beteiligt.

In der zweiten Phase II sind im vorliegenden Ausführungsbeispiel ein Anlagenbauer Montage 15 und eine weitere notifizierende Stelle 16 beteiligt.

In der dritten Phase III sind im vorliegenden Ausführungsbeispiel der Betreiber 17, eine weitere notifizierende Stelle 18 und eine Überwachungsbehörde 19 beteiligt.

Nachdem ein verteiltes peer-to-peer Netz 1 eingerichtet wurde, erstellt in der ersten Phase I im vorliegenden Ausführungsbeispiel der Lieferant 11 als erste Instanz 4a z.B. den ersten Datenblock 4a für die Blockchain 3 mit einer ersten Prüfsumme 6a. Ferner erstellt der Lieferant 11 als erste Instanz 4a die proof-of-authority Nachweise 10.

Abweichend vom vorliegenden Ausführungsbeispiel kann die Blockchain auch vom Betreiber 17 oder von der Überwachungsbehörde 19, wie z.B. dem TÜV, für den Betreiber 17 initiiert werden, da der Betreiber 17 als zeitlich erster für die Anlage die Konformität sicherstellen muss. Daher sind am Anfang der Betreiber 17, dann die Überwachungsbehörde 19, wie der TÜV oder andere behörden, dann Anlagenbauer 12, dann dessen Lieferanten 11 und dann diverse weitere Beteiligte zu autorisieren, in die Blockchain 3 Daten einzuspeisen. Wer wann autorisiert wird Daten zu publizieren und/oder zu lesen kann der Betreiber 17 oder die Überwachungsbhörde 19 administrieren. Die Reihenfolge der Datenbereitstellung hängt von den jeweiligen behörlichen Auflagen, den notwendigen technischen Systemen und vielen anderen anlagenspezifischen Randbedinungen ab.

In einem weiteren Schritt erzeugt der Anlagenbauer 12 als zweite Instanz 4b z.B. den weiteren Datenblock 4b mit einer weiteren Prüfsumme 6b, und in einem weiteren Schritt erzeugt der Qualitätsmanager 13 den weiteren Datenblock 4c mit einer weiteren Prüfsumme 6c.

Dabei wird in die jeweiligen nachfolgenden Datenblöcke die Prüfsumme 6a, 6b des vorherigen Datenblocks 6a, 6b eingefügt. Es wird also in den weiteren Datenblock 4b die Prüfsumme 6a des ersten Datenblocks 4a eingefügt und in den weiteren Datenblock 4c wird die weitere Prüfsumme 6b eingefügt.

Die weiteren Datenblöcke 4b, 4c werden erst zu der Blockchain 3 hinzugefügt, nachdem sich der Anlagenbauer 12 als zweite Instanz 4b und der Qualitätsmanager 13 mit einem jeweiligen proof-of-authority 10 autorisiert haben.

Danach steht die Blockchain 3 allen genannten Beteiligten zur Verfügung, und es werden ferner Kopien der Blockchain 3 auf alle Nodes 2a, 2b, 2c, 2d verteilt.

In einem weiteren Schritt erstellt die notifizierende Stelle 14 nach Überprüfung der in der Blockchain 3 archivierten Dokumentation ein Zertifikat 20 und fügt es z.B. als Dokument, wie z.B. als pdf-Dokument, der Blockchain 3 hinzu, nachdem sie sich mit einem jeweiligen proof-of-authority 10 autorisiert hat. Somit steht nun auch das Zertifikat 20 allen genannten Beteiligten zur Einsicht zur Verfügung. Ferner werden Kopien der Blockchain 3 auf alle Nodes 2a, 2b, 2c, 2d verteilt.

In der zweiten Phase II wird der Kreis der Beteiligten vergrößert, und zwar um den Anlagenbauer Montage 15 und die weitere notifizierende Stelle 16, die hierzu mit jeweiligen proof-of-authority Nachweisen 10 versehen werden.

Der Anlagenbauer Montage 15 erzeugt einen weiteren Datenblock mit einer weiteren Prüfsumme und fügt ihn der Blockchain 3 hinzu, nachdem er sich mit seinen proof-of-authority Nachweis 10 autorisiert hat. Im Anschluss fügt der Anlagenbauer Montage 15 nach Überprüfung der in der Blockchain 3 archivierten Dokumentation ein Zertifikat 21 der Blockchain 3 hinzu, nachdem der Anlagenbauer Montage 15 sich mit ihrem proof-of-authority Nachweis 10 autorisiert hat.

In der dritten Phase III wird der Kreis der Beteiligten nochmals vergrößert, und zwar um den Betreiber 17, die weitere notifizierende Stelle 18 und die Überwachungsbehörde 19, die hierzu mit jeweiligen proof-of-authority Nachweisen 10 versehen werden.

Gegebenenfalls erzeugt der Betreiber 17 einen weiteren Datenblock (nicht dargestellt), z.B. zur Dokumentation der ordnungsgemäßen Wartung und Prüfung.

Im Anschluss fügen die weitere notifizierende Stelle 18 und die Überwachungsbehörde 19 nach jeweiliger Überprüfung der in der Blockchain 3 archivierten Dokumentation weitere Zertifikate 22, 23 zu der Blockchain 3 hinzu, nachdem sie sich mit ihrem proof-of-authority Nachweisen 10 autorisiert haben.

Somit stellt die Blockchain 3 eine nahezu unfälschbare verteilte, da replizierte und damit hochverfügbare Datenhaltung und Ablaufumgebung bereit, in der nun die Konfomitätsverfolgung automatisch erfolgen kann.

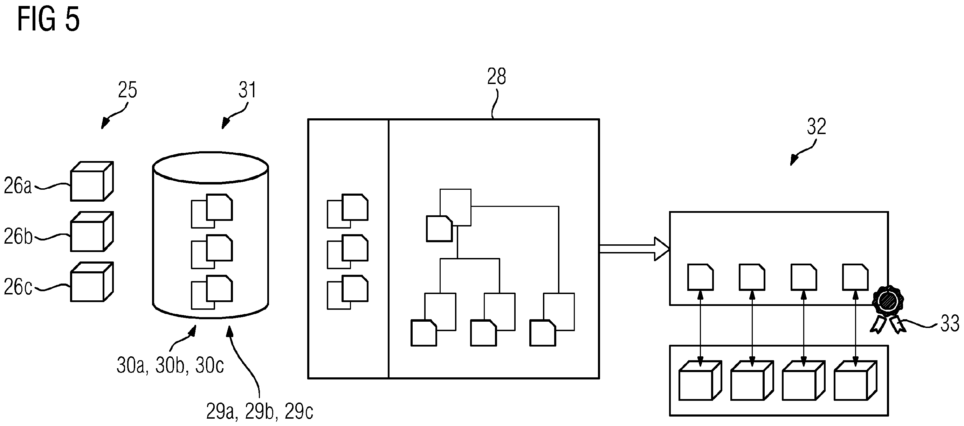

Es wird nun zusätzlich auf die Fig. 5 Bezug genommen, um ein weiteres Ausführungsbeispiel betreffend einer Anwendung bei Systemen in Prozess- oder Fertigungsanlagen im Rahmen der Planung der Anlage zu erläutern.

Bei Prozessanlagen ist die Blockchain 3 und die mit ihrer Hilfe speicherbaren Daten Bestandteil der Prozessanlage, vergleichbar mit der mit der Anlage zu pflegenden traditionellen Prüfdokumentation. Die Blockchain 3 wird z.B. durch den verantwortlichen Eigentümer/ Besitzer bzw. Betreiber 17 aufrechterhalten bzw. weiter gepflegt als in der Funktion als nun erste Instanz 5a. Mit anderen Worten, Beteiligte können ihre Rollen wechseln, d.h. die Rolle oder Funktion der ersten Instanz 5a geht von den Lieferanten 11 zu dem Betreiber 17 über.

Hierfür veranlasst der Betreiber 17 die Entstehung oder Pflege der Blockchain 3 und administriert die erforderlichen Smart Contracts 29a, 29b, 29c. Erforderliche Beteiligte, z.B. der Anlagenbauer 12, seine Lieferanten 11, die notifizierte Stelle 14, die Überwachungsbehörde 19 usw. werden autorisiert Informationen entsprechend ihrer Rolle beizutragen. Die Authentifizierung wird von der Blockchain 3 bereitgestellt und kann ggfs. noch ausgedehnt werden, z.B. durch 2-Faktor-Authentifizierung oder gemeinsame Mehrparteien-Schlüssel.

Die Auswahl und das in Funktion setzen der notwendigen/gewünschten Smart Contracts 29a, 29b, 29c kann der Verantwortliche, z.B. der Betreiber 17, initiieren und kontrollieren. Ggfs. kann er sich eines kompetenten Partners bedienen, wie z.B. der notifizierten Stelle 14, die diese Smart Contracts validiert und freigibt.

Zu Beginn des Prozesses spezifizieren z.B. der Betreiber 17 und ein Planer, wie z.B. der Anlagenbauer 12, relevante Anforderungen für die Blockchain 3 der Fabrik/Anlage, z.B. gemeinsam mit der Überwachungsbehörde 19 und der notifizierenden Stelle 14 bezüglich funktionaler Sicherheit, druckbeaufschlagte Bauteile, Explosionsschutz, Emissionen, CE-Kennzeichnung und weitere Anforderungen. Eine nachträgliche Erweiterung durch Hinzufügen weiterer Smart Contracts ist berücksichtigt.

Diese Vorgänge werden selbstständig und autonom ausgeführt.

Ein Hersteller 25 von Produkten, z.B. von fehlersicheren Steuerungen, stellt für seine Produkttypen 26a, 26b, 26c standardisierte Smart Contracts 29a, 29b, 29c zusammen mit jeweiligen Produktdokumentationen 30a, 30b, 30c öffentlich bereit, z.B. in einen Onlinekatalog 31, die die Dokumentation der Eignung, wie z.B. ein Zertifikat eines Prüfers, beinhalten.

Auch die Zertifizierung des Produkttyps 26a, 26b, 26c kann bereits hier durch eine notifizierte Stelle 14 über die Blockchain 3 realisiert werden.

Die Smart Contracts 29a, 29b, 29c ermöglichen die automatisierte Verifizierung von Planung, Ausführung und unterstützen wiederholbare Prüfungen im Rahmen der Konformitätsverfolgung.

Hersteller von Planungswerkzeugen laden diese Smart Contracts 29a, 29b, 29c über ein geeignetes Interface als Bibliotheksbestandteile in ihre Planungssysteme 28, wie z.B. COMOS oder Teamcenter.

Zunächst werden so sicherheitsrelevante Eigenschaften, z.B. das bisherige Zertifikat 20, verfügbar gemacht und die korrekte Integration der Produkte in dds Planungssystem 28 bzw. -werkzeugen sichergestellt.

Die produktspezifischen zertifizierten Smart Contracts 29a, 29b, 29c sind zwar verschlüsselt, allerdings ist der Quellcode einsehbar und durch eine Prüfsumme (nicht dargestellt), wie z.B. einen Hash, auch im Planungssystem 28 (oder später während der Konformitätsverfolgung in der Blockchain 3) verifizierbar. Dies gewährleistet Transparenz und Auditierbarkeit.

Im Rahmen der Planung einer Anlage erfolgt nun die Integration der Produkte konform ihren vorgegebenen Eigenschaften durch den Anlagenbauer 12. Das Planungssystem 28 stellt die konforme Verwendung sicher.

Bei der Instanziierung der Produkte für eine spezielle Anlage erfolgt im Planungssystem 28 die Zuordnung einer eindeutigen anlagenbezogenen Referenzkennzeichnung.

Für die Freigabe einer im Planungssystem 28 konfigurierten Lösung wird nun aus dem Planungssystem 28 die Konfiguration 32 der Produkte in der Konformitätsverfolgung publiziert. Die vom Planungssystem 28 vorgeprüfte Konfiguration 32 kann ggfs. zusätzlich durch die notifizierte Stelle 14 geprüft und freigegeben sowie mit einem Zertifikat 33 versehen werden.

Die zugehörigen Smart Contracts 29a, 29b, 29c haben nun den Meilenstein "Freigegebene Planung" erreicht und sind damit bereit für die Bestätigung der konformen Realisierung.

Die realen Produkte/Geräte sind so geartet, dass sie nun durch einen auslesbaren Schlüssel oder durch eine geeignete Kennung an der Komponente den erforderlichen Realisierungscode verfügbar machen können. Dies kann z.B. eine Kombination aus Eignung für die erforderliche Sicherheitsanforderungsstufe (SIL Level), der Instanznummer/Seriennummer, den Hersteller und den Produkttyp sein, die in der Fertigung dem Produkt mitübertragen wurden. Diese Codes werden aus der realisierten Anlage ausgelesen und an die Blockchain 3 zur Dokumentation übertragen. Die Smart Contracts 29a, 29b, 29c prüfen dies und bestätigen die Konformität autonom. Ggfs. erfolgt eine letzte Prüfung über die notifizierte Stelle 14.

So wird ein selbstzertifizierendes und automatisiertes Konfigurationsmanagement bereitgestellt, das den korrekten Einsatz der Produkte sicherstellt.

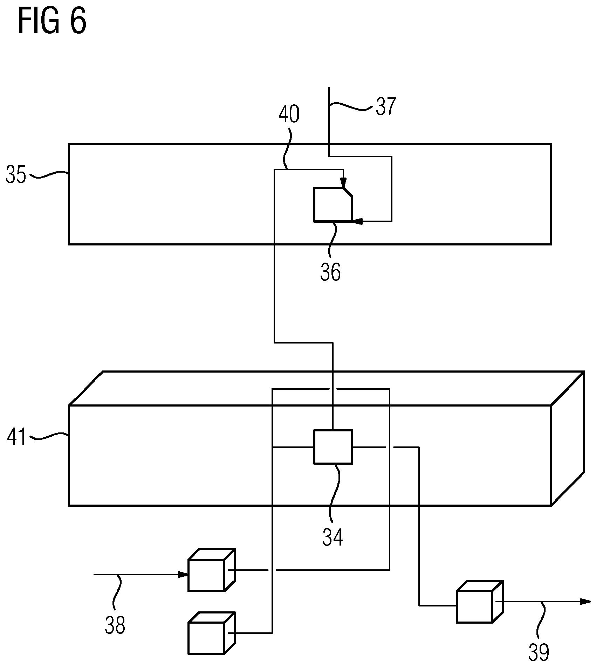

Es wird nun unter zusätzlicher Bezugnahme auf die Fig. 6 bis 8 ein Verfahren zur Funktionsprüfung erläutert.

Es wird nun zunächst auf Fig. 6 Bezug genommen.

Dargestellt ist eine Schutzlogik 34 einer fehlersicheren Steuerung 41 und ein in eine Ablaufumgebung 35 eingebettete Blockchain 3 sowie ein Smart Contract 36.

Im Betrieb triggert ein Testauslösesignal 37 den Smart Contract 36, worauf ein Testsignal 38 erzeugt wird, dass auf die Schutzlogik 34 aufgeschaltet wird. Als Ergebnis steht ein Auslösesignal 39 zur Verfügung.

Ferner wird ein Rückmeldesignal 40 zur Aktualisierung der Blockchain 3 erzeugt.

Auf das Rückmeldesignal 40 hin wird in der Blockchain 3 das Testergebnis archiviert.

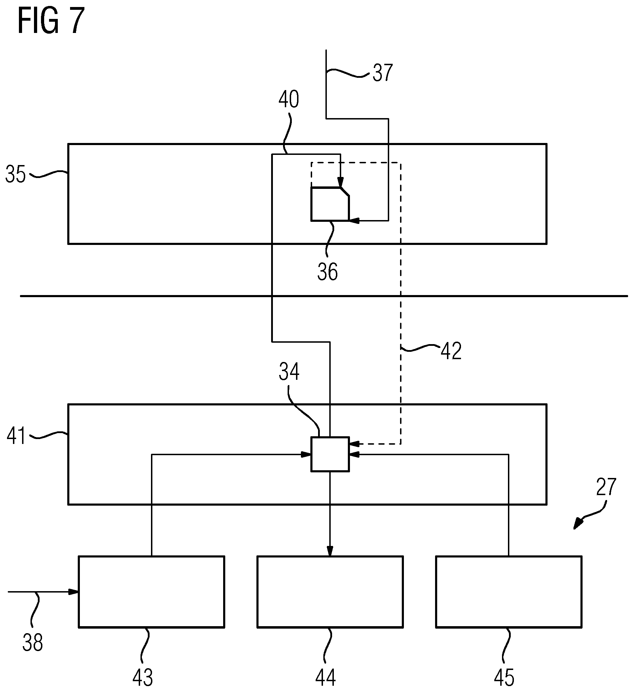

Es wird nun zusätzlich auf Fig. 7 Bezug genommen.

Das in Fig. 7 dargestellte Szenario unterscheidet sich von dem in Fig. 6 dargestellten Szenario dadurch, dass das Testauslösesignal 37 manuell in einem durch den Smart Contract 36 vorbestimmten Zeitfenster vorzuliegen hat und auf einen Sensor 43, wie z.B. einen Not-Aus-Taster, eines Sicherheitskreises 27 wirkt. Es wird also der Sicherheitskreis 27 überwacht, der im vorliegenden Ausführungsbeispiel zusätzlich einen Aktuator 44, wie z.B. ein Dampfventil, und einen Sensor 45, wie z.B. ein Sensor zur Erfassung einer Endlage, aufweist.

Zusätzlich wird ein Rücksetzsignal 42 von dem Smart Contract 36 zum Zurücksetzen der Schutzlogik 34 erzeugt. Mit dem Rücksetzsignal 42 wird die Schutzlogik 34 wieder in den Zustand gebracht, den sie vor dem Funktionstest hatte.

Ferner wird ein Rückmeldesignal 40 zur Aktualisierung der Blockchain 3 erzeugt.

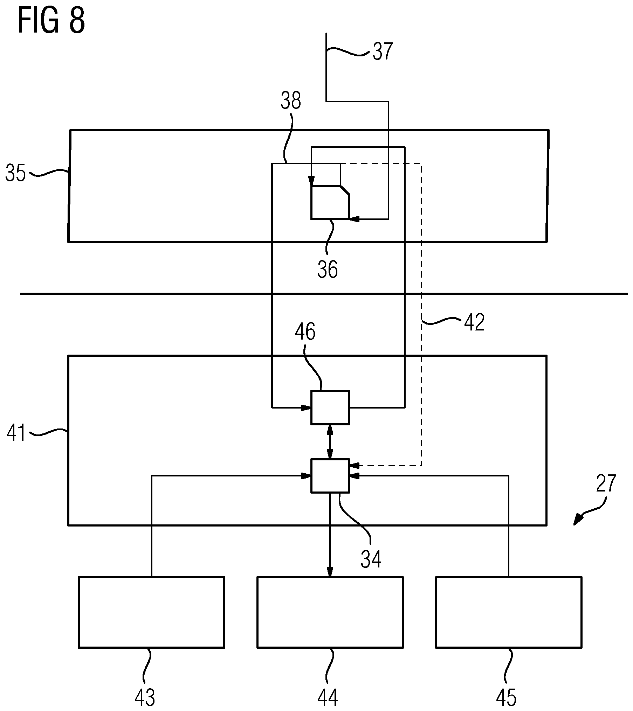

Es wird nun zusätzlich auf Fig. 8 Bezug genommen.

Höherwertig ausgeführte Anlagen bieten teilweise eine vorgefertigte Testeinrichtung, wie z.B. eine Prüflogik 46, um diese Prüfung auch während der Betriebsdauer der Anlage (meist im Stillstand) wiederholen zu können.

Das in Fig. 8 dargestellte Szenario unterscheidet sich von dem in Fig. 7 dadurch, dass, der Smart Contract 36 selbst das Testsignal 38 bereitstellt und auf die Prüflogik 46 für die Schutzlogik 34 aufschaltet.

So kann im Rahmen einer Funktionsprüfung das korrekte Zusammenspiel der einzelnen Komponenten, wie z.B. Sensoren 43, 45, Übertragung, Erfassung, Schutzlogik 34, Auslösesignal 39, Übertragung und Aktuatoren 44, sichergestellt werden. Dies erfolgt erstmalig vor einer Abnahme.

Durch ein in der Blockchain 3 dokumentierbares Auslösesignal 39 diese Funktionsprüfung und der Protokollierung der Signale und der beteiligten Geräte kann eine erfolgreiche und konforme Funktionsprüfung auch automatisiert ausgeführt und in der Blockchain 3 registriert bzw. bestätigt werden. Hierfür bedarf es im Steuerungssystem (Leitsystem) einer geeigneten Logik, die für diesen Zweck geeignet (i.d.R. vom TÜV validiert und freigegeben) sein muss.

Zusätzlich bedarf es eines Bausteins der fehlersicheren Steuerung, der Ereignisse in die Blockchain 3 übermitteln kann. Dies ist das schutzauslösende Ereignis (Eingang), ggfs. Zustände in der Verarbeitung und das Setzen der Ausgänge.

Diese Zustände werden mit erforderlichen Metadaten (Automatisierungsgerät, Zeitstempel, usw.) direkt in die Blockchain 3 übertragen, so dass eine Bewertung und Dokumentation des Ergebnisses möglich ist. Die Übertragung kann z.B. verschlüsselt erfolgen.

In Verbindung mit einem aktiven fehlersicheren Programmcode, der über die Prüfsumme 6a, 6b, 6c eindeutig in der Blockchain 3 identifiziert werden kann, ist eine lückenlose Dokumentation des Vorgangs vollständig möglich.

Um die vollständige Schutzlogik 34 (auch physikalisch) zu erfassen, z.B. das Schließen eines Ventils, müssen unter Umständen weitere Messungen in die Funktionsprüfung einbezogen werden. Dies kann das Erliegen eines Durchflusses, das Sinken eines Druckes oder die Rückmeldung der Endlage einer Armatur sein.

Da ein fehlersicherer Teil mit sogenannten Kanaltreibern den Übergang zur entsprechenden Ein und Ausgabekarte bildet, kann die physikalische Ausführung des gesamten fehlersicheren Systems einschließlich der Ein- und Ausgabekarten, Verkabelung, Bussystem, Feldgeräte nicht ohne eine neue Funktion im Steuerungssystem automatisch ausgelesen und dokumentiert werden. Unter Einbezug von intelligenten Feldgeräten (HART, Profibus) ist zumindest die Einbeziehung dieser Bereiche möglich. Hierzu kann das Steuerungssystem z.B. verschlüsselte Kennungen der Geräte auslesen können und diese in der Blockchain 3 zusammen mit den Prüfwerten der fehlersicheren Steuerung dokumentieren.

Soweit noch erforderlich, kann die notifizierte Stelle 14 nun die Auswertung der in der Blockchain 3 verfügbaren Daten stützen und die formale Freigabe erteilen.

Dem Betreiber 17 kommt im Wesentlichen noch die Verantwortung und das übergeordnete Management (Administration der Smart Contracts 29a, 29b, 29c, Autorisierung und Rollenverteilung) der Zusammenarbeit und das Veranlassen der notwendigen Maßnahmen zu.

Die Ausführung einer wiederkehrenden Funktionsprüfung kann im Leitsystem eines Kraftwerks durch das verifizierte fehlersichere System ausgeführt werden. Dabei wird das Leitsystem so programmiert, dass eine wiederkehrende Prüfung nach einer einstellbaren Zeit selbständig oder manuell veranlasst durch eine Schalthandlung des autorisierten Bedieners ausgelöst wird.

Das erfolgreiche Testergebnis (hier z.B. Test der Auslösung des Stillstandsbetriebs durch einen Not-Aus-Taster) wird mit Hilfe eines Smart-Contracts 29a, 29b, 29c in der Blockchain 3 fälschungssicher dokumentiert.

Wenn die Funktionsprüfung fehlschlägt oder nicht im erforderlichen Prüfintervall ausgelöst wird, kann die Blockchain 3 nach Ablauf einer entsprechend definierten Zeit automatisch den Anlagenbetrieb unterbrechen (automatisches Abfahren) oder eine entsprechende behördliche Meldung auslösen (vgl. auch IEC 61508-1 Kapitel 6.2.5).

Eine andere automatisierbare Funktion ist der Vergleich von zur Ausführung freigegebener Planung mit der tatsächlichen Ausführung im Bereich von mechanischen Komponenten, z.B. druckbeaufschlagten Bauteilen.

Durch die Verwendung von entsprechenden Datenformaten, z.B. 3D-Daten der Ausführungsplanung, kann ein automatischer Vergleich von Soll- und Ist-Zustand (fotografierte oder 3D-gescannte reale Ausführung) eine automatisierte Inbetriebnahme-Freigabe auslösen. Hierfür kann auf Basis von Blockchain-Technologie eine verifizierte Kamera (verifiziert = vom TÜV für diesen Zweck geprüfte und freigegebenes Kameraprodukt oder Software) verwendet werden, die fälschungssichere Aufnahmen in der Blockchain 3 bereitstellt.

Durch Scannen bzw. Aufnahme und Bildverarbeitung kann eine Vielzahl an Merkmalen erfasst werden (Werkstoffkennzeichen, Fertigungsmarken, etc.), die eine mit Smart Contracts 29a, 29b, 29c automatisierte Prüfung bzw. Zertifizierung realisiert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementiertes Verfahren zum Bereitstellen von Daten, insbesondere für eine Konformitätsverfolgung, in einem verteilten peer-to-peer Netz (1), mit den Schritten:
- Bereitstellen zumindest eines ersten Datenblocks (4a), insbesondere mit Daten repräsentativ für die Konformitätsverfolgung, zum Generieren einer Blockchain (3) mit einer ersten Prüfsumme (6a) durch eine erste Instanz (5a) des peer-to-peer Netzes (1),
- Bereitstellen zumindest eines proof-of-authority Nachweises (10) zum Verifizieren eines weiteren Datenblocks (4b, 4c),
- Erzeugen des weiteren Datenblocks (4b, 4c) repräsentativ für eine Konformitätsverfolgung mit einer weiteren Prüfsumme (6b, 6c) und zumindest der ersten Prüfsumme (6a) durch eine weitere Instanz (5b, 5c) des peer-to-peer Netzes (1),
- Prüfen des proof-of-authority Nachweises (10),
- Hinzufügen des weiteren Datenblocks (4b, 4c) zum ersten Datenblock (3a) bei erfolgreicher Prüfung des proof-of-authority Nachweises (10), um die Blockchain (3) zu bilden, und
- Bereitstellen der Blockchain (3) in dem verteilten peer-to-peer Netz (1),
wobei einer der Datenblöcke (4a, 4b, 4c) als ein Smart Contract (29a, 29b, 29c) ausgebildet ist, der auf Vorliegen eines vorbestimmten Fehlerfalls eine Fehlerbehandlungsmaßnahme bereitstellt und/oder auf Vorliegen eines Testauslösesignals (37) eine Funktionsprüfung auslöst.

2. Computerimplementiertes Verfahren nach Anspruch 1, wobei das Testauslösesignal (37) ein Testsignal (38) anfordert.

3. Computerimplementiertes Verfahren nach Anspruch 1, wobei ein Testsignal (38) von dem Smart Contract (29a, 29b, 29c) bereitgestellt wird.

4. Computerimplementiertes Verfahren nach einem der Ansprüche 1 bis 3, wobei der Smart Contract (29a, 29b, 29c) ein Rücksetzsignal (42) bereitstellt.

5. Computerimplementiertes Verfahren nach einem der Ansprüche 1 bis 4, wobei der Smart Contract (29a, 29b, 29c) ein Rückmeldesignal (40) bereitstellt.

6. Computerimplementiertes Verfahren nach einem der Ansprüche 1 bis 5, wobei das peer-to-peer Netz (1) ein privates Netz ist.

7. Computerimplementiertes Verfahren nach einem der Ansprüche 1 bis 6, wobei der proof-of-authority Nachweis (10) zumindest eine zeitlich begrenzte Gültigkeitsdauer hat.

8. Computerimplementiertes Verfahren nach einem der Ansprüche 1 bis 7, wobei der proof-of-authority Nachweis (10) zumindest eine inhaltliche Gültigkeit hat.

9. Computerimplementiertes Verfahren nach einem der Ansprüche 1 bis 8, wobei der proof-of-authority Nachweis (10) zumindest eine nutzerbezogene Gültigkeit hat.

10. Computerimplementiertes Verfahren nach einem der Ansprüche 1 bis 9, wobei ein Datenblock (4a, 4b, 4c) als Smart Contract ausgebildet ist, der auf Vorliegen einer vorbestimmten Bedingung den proof-of-authority Nachweis (10) bereitstellt.

11. Computerimplementiertes Verfahren nach einem der Ansprüche 1 bis 10, wobei eine Heilungsfunktion vorgesehen ist zum Ändern von zumindest einem der Datenblöcke (4a, 4b, 4c) .

12. System zum Bereitstellen von Daten, umfassend Mittel zur Ausführung der Schritte des Verfahrens nach einem der Ansprüche 1 bis 11.

13. Computerprogrammprodukt, umfassend Befehle, die bei der Ausführung des Programms durch einen Computer diesen veranlassen, zumindest einen der Schritte der Ansprüche 1 bis 11 auszuführen, wobei der Computer der ersten Instanz (5a) zugeordnet ist.

14. Computerprogrammprodukt, umfassend Befehle, die bei der Ausführung des Programms durch einen Computer diesen veranlassen, zumindest einen der Schritte der Ansprüche 1 bis 11 auszuführen, wobei der Computer einer der weiteren Instanzen (5b, 5ca) zugeordnet ist.

15. Computerprogrammprodukt, umfassend Befehle, die bei der Ausführung des Programms durch einen Computer diesen veranlassen, zumindest einen der Schritte der Ansprüche 1 bis 11 eines Smart Contracts (29a, 29b, 29c) auszuführen.
